# EUROPÄISCHE PATENTANMELDUNG

(11) **EP 4 707 696 A2**
(43) Veröffentlichungstag der Anmeldung: **11.03.2026**
(21) Anmeldenummer: 25223808.4
(22) Anmeldetag: 18.06.2025
(51) Int. Cl.: F24S 25/70

(54) **SOLARTISCHSYSTEM, PHOTOVOLTAIKANLAGE**

(30) Priorität: 18.06.2024 DE 202024103277 U
(62) Teilanmeldung aus: 25183666.4
(71) Anmelder: REG Energy Engineering GmbH & Co. erste KG, 15936 Dahmetal (DE)
(72) Erfinder: Kühnel, Dirk, 15537 Gosen-Neu Zittau (DE)
(74) Vertreter: Fritz Patent- und Rechtsanwälte PartmbB

(57) **Zusammenfassung**

Solartischsystem (100) für eine Photovoltaikanlage (101), insbesondere eine Agri-Photovoltaikanlage (101), umfassend: eine Mehrzahl an Stützeneinheiten (1) zur Ableitung der statischen Belastung in einen Boden (2); und eine Mehrzahl an Hauptträgereinheiten (3), wobei ein Hauptträger (31) der Hauptträgereinheit (3) an zwei Stützeneinheiten (1) aufnehmbar ist; und eine Mehrzahl an Modulträgereinheiten (4) zur Aufnahme von Photovoltaikmodulen (102), wobei eine Modulträgereinheit (4) an zwei Hauptträgereinheiten (3) aufnehmbar ist und ein Photovoltaikmodul (102) an zwei Modulträgereinheiten (4) aufnehmbar ist. Die Hauptträgereinheit (3) weist einen Hauptträger (31) mit einem Hauptträgerprofil (311) auf, welches asymmetrisch ausgebildet ist; und/oder die Stützeneinheit (1) umfasst wenigstens eine Stütze (11) mit einem offenen Stützenprofil (111) mit zwei Schenkeln (112) und sechs Biegungen an der offenen Seite (113); und/oder die Modulträgereinheit (4) umfasst eine Einschubaufnahme (411) für Photovoltaikmodule (102).

## Beschreibung

Die vorliegende Erfindung betrifft ein Solartischsystem, für eine Photovoltaikanlage mit Stützeneinheiten, Hauptträgereinheiten und/oder Modulträgereinheiten und eine Photovoltaikanlage mit einem solchen Solartischsystem und Photovoltaikmodulen.

Solartische stellen eine Unterkonstruktion auf Flächen, wie Freiflächen, wie beispielsweise Wiesen oder auch Äckern oder dergleichen, oder auch anderen Flächen, wie Parkplätzen oder dergleichen, zur Aufnahme von Photovoltaikmodulen bereit.

Aus dem Stand der Technik sind Solartische für Photovoltaikanlagen bekannt geworden, wie aus der DE 10 2009 003 151 A1, der KR 2020 105 414 U1 oder der DE 20 2022 105 414 U1. Konventionelle Solartische weisen Stützen zur Verankerung im Boden auf. Die Stützen werden senkrecht ins Erdreich getrieben. Auf die Stützen werden dann Träger mittels eines Krans aufgesetzt. An den Trägern werden dann Aufnahmen montiert, auf welche Photovoltaikmodule aufgebracht werden. Die Photovoltaikmodule werden durch Modulklemmen verschraubt. Anschließend müssen die Anschlusskabel verlegt und an dem Solartischsystem befestigt werden. Für Stützen, Träger und Aufnahmen werden C-Profile aus Stahl mit Zinkbeschichtung verwendet. Nachteilig ist hier, dass die Profile nicht für große Spannweiten geeignet sind. Die hohen Gewichte machen eine Montage besonders schwierig. Darüber hinaus sind Stützen in kurzen Abständen erforderlich. Dies führt oft dazu, dass eine darunterliegende Nutzfläche, wenn überhaupt, nur sehr begrenzt nutzbar ist. Eine Skalierung der Profile führt zu überproportional großen Wandstärken der Profile. Insgesamt werden dadurch die Herstellungs- und Montagekosten der Solartische so groß, dass sich der Zugewinn der nutzbaren Fläche unterhalb des Solartisches erst, wenn überhaupt, nach Jahren amortisiert. Große Spannweiten sind daher nicht wirtschaftlich realisierbar mit offenen Profilen.

Es ist deshalb die Aufgabe der vorliegenden Erfindung ein Solartischsystem für eine Photovoltaikanlage und eine Photovoltaikanlage zur Verfügung zu stellen, welche eine vorteilhaftere Nutzung der darunterliegenden Fläche ermöglicht und gleichzeitig wirtschaftlicher herstellbar und montierbar ist.

Die Aufgabe wird durch ein Solartischsystem mit den Merkmalen nach Anspruch 1 und eine Photovoltaikanlage mit den Merkmalen nach Anspruch 12 gelöst. Bevorzugte Weiterbildungen sind Gegenstand der abhängigen Ansprüche. Weitere Merkmale und Eigenschaften ergeben sich aus der allgemeinen Beschreibung und aus der Beschreibung des Ausführungsbeispiels.

Das erfindungsgemäße Solartischsystem für eine Photovoltaikanlage, insbesondere eine Agri-Photovoltaikanlage, umfasst:
- eine Mehrzahl an Stützeneinheiten zur Ableitung der statischen Belastung in einen Boden; und
- eine Mehrzahl an Hauptträgereinheiten, wobei ein Hauptträger an zwei Stützeneinheiten aufnehmbar ist; und
- eine Mehrzahl an Modulträgereinheiten zur Aufnahme von Photovoltaikmodulen, wobei eine Modulträgereinheit an zwei Hauptträgereinheiten aufnehmbar ist und ein Photovoltaikmodul an zwei Modulträgereinheiten aufnehmbar ist.
Die Hauptträgereinheit weist einen Hauptträger mit einem Hauptträgerprofil auf, welches asymmetrisch ausgebildet ist; und/oder die Stützeneinheit umfasst insbesondere wenigstens eine Stütze mit einem offenen Stützenprofil mit zwei Schenkeln und sechs Biegungen; und/oder die Modulträgereinheit umfasst eine Einschubaufnahme für Photovoltaikmodule.

Die Erfindung hat viele Vorteile. Ein erheblicher Vorteil der Erfindung ist, dass durch die konstruktive Ausgestaltung der Stützeneinheit, der Hauptträgereinheit und der Modulträgereinheit höhere Steifigkeiten der einzelnen Einheiten erzielbar sind. Dementsprechend können größere Längen überspannt werden. Gleichzeitig sind geringere Wandstärken erforderlich. Dadurch ist das System leichter als bei den aus dem Stand der Technik bekannten Solartischen, sodass weniger Stützen erforderlich sind. Folglich ist das erfindungsgemäße Solartischsystem wirtschaftlicher herstellbar und montierbar, wobei gleichzeitig eine verbesserte Nutzung der darunterliegenden Freifläche ermöglicht wird.

Das Hauptträgerprofil des Hauptträgers ist nicht symmetrisch ausgeführt. Vorteilhaft kann dadurch die asymmetrisch auf das Hauptträgerprofil wirkende Last besser aufgenommen und abgeleitet werden. Diese spezielle Profilform ist in der Lage den asymmetrischen Lasteneinwirkungen optimal entgegenzuwirken. Insbesondere umfasst das Hauptträgerprofil wenigstens ein C-Profil.

Vorteilhaft ist die Einschubaufnahme so ausgebildet, dass das Photovoltaikmodul von drei Seiten umfasst und/oder wenigstens teilweise umschlossen wird. Vorteilhaft ermöglichen die Einschubaufnahmen ein leichtes Einschieben der Module zwischen zwei montierten Modulträgern. Vorteilhaft muss das Photovoltaikmodul deshalb nicht noch extra mit der Modulträgereinheit verschraubt werden. Es liegt vorteilhaft eine formschlüssige Verbindung zwischen dem Profil des Modulträgers der Modulträgereinheit und dem Photovoltaikmodul vor. Die Druckkräfte, die auf das Photovoltaikmodul wirken, werden über den umschlossenen Endteil an den Modulträger der Modulträgereinheit übertragen und großflächig abgeleitet. Es sind keine Schrauben oder andere Befestigungsmittel notwendig. Durch den Querschnitt der Einschubaufnahme insbesondere zusammen mit einer Materialgüte, einer Materialmasse und/oder einer Materialstärke weist das Bauteil eine besonders hohe Steifigkeit und Stabilität auf.

Bevorzugt weist das Hauptträgerprofil des Hauptträgers zwei Schenkel und eine Grundseite auf, und wobei ein Winkel zwischen den beiden Schenkeln des Hauptträgerprofils und einer Grundseite, insbesondere jeweils, verschieden von 90 Grad ist. Vorzugsweise liegt eine Grundseite gegenüber einer Öffnung des Profils. Insbesondere erstrecken sich die Schenkel von der Grundseite weg. In einer vorteilhaften Ausgestaltung weist ein und insbesondere die beiden Schenkel insbesondere einen Gesamtwinkel von 180 Grad auf.

Besonders bevorzugt weist die Grundseite wenigstens abschnittsweise eine Steigung auf, welche eine Neigung der Photovoltaikmodule vorgibt. Vorteilhaft können die Modulträgereinheiten dadurch direkt auf dem Abschnitt mit der Steigung montiert werden. Dadurch ist vorteilhaft kein gesondertes Teil oder dergleichen zum Einstellen der Neigung der Photovoltaikmodule, insbesondere gegenüber wenigstens einem Teil des Solartischsystems notwendig.

Vorzugsweise weist der Hauptträger der Hauptträgereinheit eine Länge von mehr als 8 Metern, bevorzugt von mehr als 9 Meter und besonders bevorzugt mehr als 10 Metern auf. Besonders vorteilhaft weist der Hauptträger eine Länge von ca. 10 Metern (+/- 20 %) auf. Vorteilhaft ist der einteilige Hauptträger der dadurch besonders steif und leicht und somit besonders wirtschaftlich herstellbar und montierbar ist. Vorteilhaft ist der einteilige Hauptträger besonders robust.

Vorteilhaft weist das Profil des Hauptträgers der Hauptträgereinheit eine Profilstärke von weniger als 5 Millimetern oder 3 Millimetern oder 2,5 Millimetern auf. In einer besonders vorteilhaften Variante weist das Profil des Hauptträgers eine Profilstärke von 2 Millimetern auf. Vorzugsweise ist eine Profilstärke von 2 Millimetern bereits ausreichend, um die statische Festigkeit dauerhaft zu garantieren. Vorteilhaft ist das Profil aus einem Metall und insbesondere aus einem Blechmaterial hergestellt, insbesondere durch Biegen oder Kanten. Vorteilhaft ist der Hauptträger dadurch besonders leicht und die Herstellungskosten sind gering, da die Materialkosten besonders gering sind, insbesondere bei den großen Spannweiten.

Zweckmäßig weist das Hauptträgerprofil des Hauptträges der Hauptträgereinheit wenigstens eine seitliche Abkantung am Ende eines Schenkels auf. Insbesondere weist das Hauptträgerprofil insbesondere an beiden Schenkeln seitliche Abkantungen auf, welche insbesondere von dem Schenkel nach außen abstehen. Insbesondere zeigen die Abkantungen nach außen, d. h. weg von der Öffnung des Hauptträgerprofils. Vorzugsweise liegen die Abkantungen außerhalb der Projektionsfläche der Grundseite, und sind nach außen umgebogen und insbesondere V-förmig umgebogen. Vorteilhaft wird hierdurch eine noch höhere Steifigkeit des Hauptträgerprofils erzielt. Die seitlichen Abkantungen am unteren Ende der vertikal stehenden Schenkel dienen im Montageprozess als Laufschienen für fahrbare Arbeitsbühnen. Weiter vorteilhaft können die Abkantungen zur Aufnahme und Führung der Kabelführung genutzt werden. Dieselben Abkantungen können nach der Montage der Module als Kabelbühnen für die String-Kabel der Module verwendet werden. Vorteilhaft kann das Hauptträgerprofil mit den Abkantungen auch als Hutprofil gesehen werden.

Vorzugsweise umfasst und/oder wenigstens teilweise umschließt der Hauptträger der Hauptträgereinheit im bestimmungsgemäßen Gebrauch, insbesondere im montierten Zustand ein distales Ende der Stützeneinheit. Vorteilhaft ist der Hauptträger an dem distalen Ende der Stütze übergestülpt. Insbesondere umfasst der Hauptträger das distale Ende der Stütze im bestimmungengemäßen Gebrauch und/oder im montierten Zustand. Insbesondere ist das distale Ende der Stütze in einer Öffnung des Profils des Hauptträgers aufgenommen. Vorteilhafthaft wird die Konstruktion dadurch noch steifer. Weiter kann der Hauptärger bei der Montage zunächst sicher auf den distalen Enden von zwei Stützen abgelegt werden. Dadurch ist eine vertikale Endlage immer vordefiniert. Eine horizontale Endlage kann durch einfaches Verschieben auf den distalen Enden eingestellt und erreicht werden. Weiter kann der Hauptträger ebenfalls durch die Stützen angehoben werden. Vorteilhaft wird durch diese steife konstruktionsweise auch eine noch bessere Ableitung von Kräften in Querrichtung ermöglicht. Weiter vorteilhaft wird durch das Überstülpen und die Verschraubung mit dem Hauptträger die Profilkontur der Stütze am oberen Ende geschlossen. Dies macht das System zusätzlich widerstandfähiger gegenüber Torsionskräften um die Längsachse, sodass die Stabilität des Gesamtsystems erhöht wird.

Vorteilhaft ist wenigstens eine Verbindungseinheit zur Herstellung einer festen, und insbesondere lösbaren, Verbindung zwischen dem Hauptträger der Hauptträgereinheit und der Stütze der Stützeneinheit umfasst. Insbesondere umfasst die Verbindungseinheit wenigstens ein Verbindungselement, welches insbesondere als Verbindungsbolzen und/oder Schraube ausgebildet ist. Vorteilhaft sind die Stützeneinheit und die Hauptträgereinheit dadurch direkt miteinander verbindbar.

Insbesondere weist die Verbindungseinheit wenigstens ein Ausgleichselement, insbesondere zwei Ausgleichselemente, auf, welche einen Ausgleich von Positionstoleranzen bei der Montage ausgleichen. Vorteilhaft umfassen die Ausgleichselemente Langlöcher. Insbesondere sind die Langlöcher in dem Hauptträger und/oder der Stütze ausgebildet, welche sich insbesondere quer zueinander erstrecken. Vorteilhaft können die Elemente auch beim Vorliegen einer Verbindung zueinander verschoben und positioniert und ausgerichtet werden. Vorteilhaft kann eine Verbindung der Hauptträgereinheit an der Stützeneinheit mit nur drei Schrauben mit Muttern, beispielsweise der Größe M12x25 Millimetern ermöglicht werden, sodass eine besonders einfache Montage ermöglicht werden kann.

Vorteilhaft sind Langlöcher an der Stütze der Stützeneinheit und dem Hauptträger der Hauptträgereinheit vorhanden. Vorteilhaft ist die Verbindungseinheit so berechnet, dass Lageabweichungen verschiedener Hauptträger von der horizontalen Geländeneigung von bis zu 10 ° kompensiert werden können. Dadurch ist eine besonders gute Anpassbarkeit des Solartischsystems an die Gegebenheiten vorhanden. Vorteilhaft können dadurch alle im Bauprozess auftretenden als normal einzustufenden horizontalen Toleranzen vom Hauptträger kompensiert werden.

Vorzugsweise weist wenigstens das Stützenprofil der Stütze der Stützeneinheit wenigstens eine Symmetrie auf. Vorzugsweise weist wenigstens das Stützenprofil der Stütze der Stützeneinheit eine Profilstärke von 2 Millimetern oder 3,5 Millimetern oder 4,5 Millimetern oder sogar darüber hinaus auf. In einer besonders vorteilhaften Variante weist das Profil eine Profilstärke von 3 Millimetern auf. Vorteilhaft ist eine Profilstärke von 3 Millimetern bereits ausreichend, um die statische Last dauerhaft abzufangen. Vorteilhaft werden dabei bei einer Länge der Stützeneinheit von mehr als 4,5 Metern erreicht, welche alle statischen Anforderungen erfüllt. Insbesondere umfasst wenigstens das Stützenprofil der Stütze der Stützeneinheit Abkantungen, welche nach innen gerichtet sind. Vorteilhaft wird durch jede dieser Maßnahmen eine besonders hohe Widerstandsfähigkeit gegen Knickung der Stützeneinheit erreicht. Darüber hinaus verhindert die Profilform mit nach innen ausgeführten Abkantungen Verletzungen von Menschen und Tieren.

Insbesondere umfasst die Stützeneinheit wenigstens eine Erdstütze, wobei die Erdstütze in den Boden, wie ein Erdreich von einem Acker oder dergleichen eintreibbar ist. Insbesondere ist die Stütze der Stützeneinheit an der Erdstütze aufnehmbar, insbesondere einsteckbar. Vorzugsweise reduziert die Einsteckstütze die erforderliche Einzellänge der Stützen, beispielsweise in einer Ausführungsform von 5,3 Metern auf maximal 4,3 Metern. Weiter wird das Gewicht der Stützen reduziert, was die Handhabung bei der Montage erleichtert.

Bevorzugt weist die Stützeneinheit eine Einstelleinheit zum Höhenausgleich und zur Einstellung einer Neigung auf. Vorteilhaft kann am unteren Ende der Stütze ein Höhenausgleich zwischen Hauptträger und Boden von bis zu 30 Zentimeter oder mehr des Tisches vorgenommen werden. Vorteilhaft können dadurch sehr hohe Toleranzen, insbesondere bei unebenem Gelände ausgeglichen werden. Vorteilhaft kann die Einstecklänge der Stützte durch die Einsteckeinheit eingestellt werden. Vorteilhaft umfasst die Einstelleinheit wenigstens mehrere Einstelllöcher, welche beispielsweise an der Erdstütze ausgebildet sind, sodass eine Einstecklänge der Stütze insbesondere durch eine Schraube oder ein anderes Befestigungselement in verschiedenen Positionen einstellbar ist.

Besonders bevorzugt umfasst die Modulträgereinheit Sicherungseinheiten zum Fixieren und Sichern der Lage der Photovoltaikmodule, insbesondere innerhalb der Einschubaufnahme.

Insbesondere umfasst die Sicherungseinheit wenigstens eine Biegelasche, welche an einem Modulträgerprofil des Modulträgers der Modulträgereinheit an der Einschubaufnahme ausgebildet ist. Insbesondere kann die Biegelasche nach oder bei der Fertigung des Modulträgerprofils eingebracht werden. Zur Sicherung der eingeschobenen Photovoltaikmodule kann die Biegelasche dann einfach umgebogen werden, welches ein Herausgleiten der Module nach unten verhindert. Das Abheben der Module wird durch die obere Abkantung verhindert, sodass das Photovoltaikmodul in der Einschubaufnahme gesichert ist. Vorteilhaft kann dadurch auch auf anderen Sicherungselemente, wie Modulklemmen verzichtet werden, sodass die Materialkosten an dieser Stelle um 2€/kWp gesenkt werden können gegenüber dem Stand der Technik. Außerdem ist vorteilhaft eine deutlich schnellere Verlegung der Module möglich. Beispielshaft kann von mind. 6€/kWp Kostenreduktion in der Montage ausgegangen werden. Die Biegelaschen können als Ausschnitte direkt in das Modulträgerprofil des Modulträgers eingebracht werden.

Insbesondere ist ein Modulträgerprofil der Modulträgereinheit und auch die Ausschnitte innerhalb des Modulträgerprofils symmetrisch ausgebildet. Vorteilhaft weist ein Modulträger einer Modulträgereinheit dadurch Einschubaufnahmen an gegenüberliegenden Seiten des Modulträgerprofils auf. Weiter vorteilhaft kann eine Symmetrie der Langlöcher und Ausstanzungen entlang der Längsachse sicherstellen, dass die Enden des Modulträgers sowohl am unteren Ende wie am oberen Ende des Tisches liegen können, ohne dass auf eine gerichtete Einbaulage geachtet werden muss.

Vorzugsweise ist wenigstens eine Befestigungseinheit zur Befestigung der Modulträgereinheit an der Hauptträgereinheit umfasst. Insbesondere umfasst die Befestigungseinheit wenigstens ein Befestigungselement, welches vorzugsweise als ein Langloch ausgebildet ist, zum Ausrichten und Positionieren der Modulträgereinheit bei der Montage. Vorzugsweise umfasst die Befestigungseinheit mehrere Langlöcher, welche in den Modulträgern der Modulträgereinheit angeordnet sind und ein weiteres Befestigungsloch in dem Hauptträger der Hauptträgereinheit. Die Befestigung kann dann durch ein Befestigungsmittel, wie eine Schraube mit einer Mutter, realisiert werden. Vorteilhaft vereinfacht dies das Handling für die Monteure und fordert keine besondere Konzentration oder Vorkehrung für lagegerechten Einbau des Modulträgers. Vorteilhaft ist die Befestigung der Modulträgereinheiten dadurch sehr einfach und schnell zu handhaben.

Vorteilhaft ist wenigstens eine Spanneinheit zur Vergrößerung einer Spannweite umfasst. Insbesondere umfasst die Spanneinheit wenigstens einen Untergurt. Vorteilhaft kann ein Untergurt zwei Hauptträgereinheiten gegeneinander verspannen, sodass hier auf Stützeneinheiten verzichtet werden kann. Insbesondere sind zusätzliche Verspannelemente vorhanden, um die verbleibenden Stützeneinheiten zusätzlich gegeneinander zu verspannen. Besonders vorteilhaft eignet sich die Verspanneinheit bei Solartischsystemen, welche zwei Modulträgereinheiten mit entgegengesetzten Neigungen aufweisen. Solche Anordnungen werden vor allem bei Photovoltaikanlagen mit Photovoltaikmodulen mit Ost-West-Ausrichtungen eingesetzt. Durch eine vergrößerte Spannweite nehmen Beschränken zur Bearbeitung des darunterliegenden Bodens immer geringer, d. h. es können beispielsweise noch breitere Maschinen eingesetzt werden.

Insbesondere weist das Solartischsystem eine Bauhöhe der Hauptträgereinheit von wenigstens 2,10 m an der niedrigsten Stelle im montierten Zustand auf. Vorteilhaft erfüllt eine Bauhöhe von mind. 2,10 m an der tiefsten Stelle die Vorgaben der DIN SPEC 91434, wodurch eine Bearbeitung mit landwirtschaftlichen Maschinen unter dem Solartischsystem sichergestellt wird. Vorteilhaft ist das Solartischsystem dadurch auch für Argi-Photovolatikanlagen nutzbar. Vorteilhaft wird eine Bewirtschaftung unterhalb des Solartischsystem sichergestellt.

Vorteilhaft ist eine Spannweite, insbesondere zwischen den Stützen, mehr als 3,5 Metern oder 4 Metern oder 5Metern, vorhanden. Vorteilhaft kann dadurch eine besonders gute Bearbeitung des darunter liegenden Bodens sichergestellt werden. Gleichzeitig wird eine statische Eignung des Gesamtsystems unter Beachtung der statischen Tragfähigkeit der Module für Deutschland bis Schneelastzone 2, Windlastzone 2 bei einer Höhe bis zu 500 Metern über N.N. gegeben durch das Solartischsystem.

In einer besonders vorteilhaften Ausgestaltung besteht das Solartischsystem aus vier Stützeneinheiten, zwei Hauptträgereinheiten; und einer Mehrzahl an Modulträgereinheiten. Vorteilhaft ist in dieser Ausführungsform eine nutzbare Gesamtfläche von mehr als 50 Quadratmetern, 60 Quadratmetern oder 65 oder bis zu 70 Quadratmetern vorhanden. Insbesondere beträgt eine nutzbare Gesamtfläche des Solartischsystem ca. 68 Quadratmeter. Vorteilhaft kann hierdurch eine Photovoltaikleistung von bis zu 15,5 Kilo-Watt-Peak nach heutigem Stand realisierbar sein. Gleichzeitig können die Kosten für die Unterkonstruktion bei ca. 1.200 € inklusive Schrauben und Transportkosten zur Baustelle liegen, wodurch das System sehr preiswert ist.

Eine erfindungsgemäße Photovoltaikanlage umfasst ein zuvor beschriebenes Solartischsystem und wobei Photovoltaikmodule in dem Modulträgereinheiten aufgenommen sind. Bevorzugt sind die Photovoltaikmodule in dem Modulträgereinheiten aufgenommen und insbesondere gesichert. Weiterbildungen der Photovoltaikanlage ergeben sich aus der allgemeinen Beschreibung und aus der Beschreibung des Ausführungsbeispiels.

Weitere Merkmale und Vorteile des Ausführungsbeispiels der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische Seitenansicht eines Ausführungsbeispiels einer erfindungsgemäßen Photovoltaikanlage mit einem erfindungsgemäßen Solartischsystem mit Stützeneinheit, Hauptträgereinheit und Modulträgereinheit;
- Fig. 2: eine schematische Draufsicht auf die Photovoltaikanlage mit dem Solartischsystem;
- Fig. 3: eine schematische perspektivische Ansicht eines Teils des Solartischsystems mit einer Verbindungseinheit und einer Befestigungseinheit;
- Fig. 4: eine schematische Skizze eines Querschnitts eines Hauptträgerprofils eines Hauptträgers einer Hauptträgereinheit des Solartischsystems;
- Fig. 5: eine schematische Draufsicht auf das Hauptträgerprofil des Hauptträgers der Hauptträgereinheit;
- Fig. 6: eine erste schematische perspektivische Ansicht des Hauptträgerprofils des Hauptträgers der Hauptträgereinheit;
- Fig. 7: eine zweite schematische perspektivische Ansicht des Hauptträgerprofils des Hauptträgers der Hauptträgereinheit;
- Fig. 8: eine schematische Skizze eines Modulträgerpofils eines Modulträgers einer Modulträgereinheit des Solartischsystems;
- Fig. 9: eine schematische Skizze des Modulträgerprofils des Modulträgers mit einer Sicherungseinheit;
- Fig. 10: eine schematische Ansicht des Modulträgerprofils des Modulträgers von unten;
- Fig. 11: eine schematische perspektivische Ansicht des Modulträgerprofils des Modulträgers der Modulträgereinheit;
- Fig. 12: eine schematische Skizze eines Stützenprofils einer Stütze einer Stützeneinheit des Solartischsystems;
- Fig. 13: eine schematische Ansicht des Stützenprofils der Stütze von oben;
- Fig. 14: eine schematische Ansicht des Stützenprofils der Stütze von unten;
- Fig. 15: eine schematische perspektivische Ansicht des Stützenprofils der Stütze;
- Fig. 16: eine schematische Skizze eines Erdstützenprofils einer Erdstütze der Stützeneinheit;
- Fig. 17: eine schematische Draufsicht auf das Erdstützenprofil der Erdstütze;
- Fig. 18: eine schematische perspektivische Ansicht des Erdstützenprofils der Erdstütze; und
- Fig. 19: eine schematische Seitenansicht eines weiteren Ausführungsbeispiels eines erfindungsgemäßen Solartischsystems mit einer Spanneinheit zur Vergrößerung der Spannweite.

Es ist nicht notwendig, dass ein erfindungsgemäßes Solartischsystem alle nachfolgend beschriebenen Merkmale aufweist. Es ist auch möglich, dass ein erfindungsgemäßes Solartischsystem nur einzelne Merkmale der nachfolgend beschriebenen Ausführungsbeispiels aufweist.

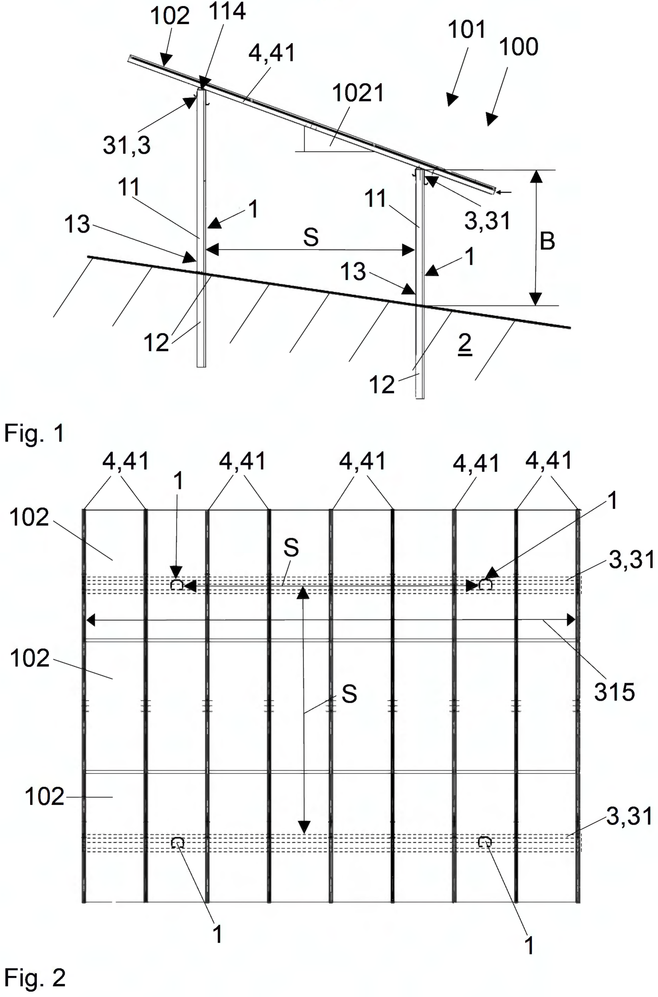

Fig. 1 zeigt eine schematische Seitenansicht eines Ausführungsbeispiels einer erfindungsgemäßen Photovoltaikanlage 101 mit einem erfindungsgemäßen Solartischsystem 100 mit Stützeneinheit 1, Hauptträgereinheit 3 und Modulträgereinheit 4. Es sind mehrere Photovoltaikmodule 102 gesichert an den Modulträgereinheiten 4 aufgenommen. Eine Neigung der Photovoltaikmodule 102 und der Photovoltaikanlage 102 ist vorgegeben, um einen optimalen Ertrag an elektrischer Energie zu ermöglichen.

Die Stützeneinheit 1 umfasst hier Stützen 11 und Erdstützen 12. Die Stützen 11 sind in die Erdstützen 12 eingesteckt. Eine Höhe der Stützen 11 kann durch Einstelleinheiten 13 eingestellt werden. Vorteilhaft können auch Unebenheiten eines Bodens 2 einer darunterliegenden Fläche ausgeglichen werden. Weiter ist eine Neigung 1021 der Photovoltaikmodule 102 einstellbar. Die Erdstützen 12 sind hier in einen Boden 2 einer landwirtschaftlichen Fläche, wie einem Acker, eingetrieben. Die Stützeneinheiten 1 leiten eine Belastung in den Boden 2 ab.

Die Hauptträgereinheiten 3 umfassen Hauptträger 31, welche hier auf zwei Stützen 11 aufliegen. Der Hauptträger 31 weist ein asymmetrisches Hauptträgerprofil 311 auf und ist über ein distales Ende 114 der Stütze 11 der Stützeneinheit 1 übergestülpt. Das Hauptträgerprofil 311 umfasst hier einen Bereich, welcher eine Öffnung bildet, wie bei einem C-Profil.

Modulträger 41 der Modulträgereinheit 4 sind an den Hauptträgern 31 befestigt. In den Modulträgern 41 sind die Photovoltaikmodule 102 aufgenommen.

Das Solartischsystem stellt eine Bauhöhe B von wenigstens 2,10 Metern zur Verfügung, sodass eine landwirtschaftliche Bearbeitung der darunterliegenden landwirtschaftlichen Fläche möglich ist. Das Solartischsystem 100 hat hier eine Spannweite S von 4 Metern zwischen den Stützen, sodass die Stützeneinheiten 1 bei der Nutzung des landwirtschaftlichen Boden 2 nur minimalen Einfluss haben.

Fig. 2 zeigt eine schematische Draufsicht auf die Photovoltaikanlage 102 mit dem Solartischsystem 100. Hier sind vier Stützeneinheiten 1 vorhanden. Auf zwei Stützen 11 von Stützeneinheiten 1 sind jeweils Hauptträger 31 von Hauptträgereinheiten 3 aufgenommen. Auf den Hauptträgern 31 sind die Modulträger 41 der Modulträgereinheiten 4 befestigt. In den Modulträgern 41 sind die Photovoltaikmodule 102 vorhanden. Durch die asymmetrische Form des Hauptträgerprofils 311 des Hauptträgers 31 hat dieser hier eine Länge 314 von ca. 10 Metern. So kann durch das Solartischsystem 100 eine Gesamtfläche von ca. 68 Quadratmetern zur Verfügung gestellt werden, wobei gleichzeitig eine Bearbeitung des Bodens 2 unterhalb der Photovoltaikmodule 102 sichergestellt wird.

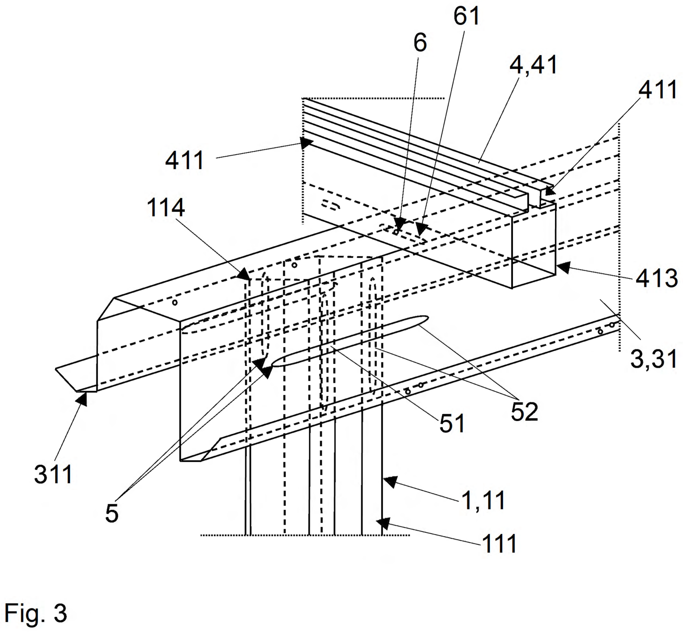

Fig. 3 zeigt eine schematische perspektivische Ansicht eines Teils des Solartischsystems 100 mit einer Verbindungseinheit 5 und einer Befestigungseinheit 6.

Die Verbindungseinheit 5 ist zwischen dem Hauptträger 31 und der Stütze 11 vorhanden. Die Verbindungseinheit 5 umfasst Verbindungselemente 51, welche hier als Schraube mit jeweils einer Mutter ausgebildet sind, und Ausgleichselemente 52, welche hier als Langlöcher 52 in der Stütze 11 und dem Hauptträger 31 ausgebildet sind. Durch die Ausgleichselemente 52 können Toleranzen bei der Montage ausgeglichen werden. Die Langlöcher an den Stützen 11 und den Hauptträgern 31 erstrecken sich quer zueinander, sodass eine maximale Flexibilität gegeben ist. Vorteilhaft kann der Hauptträger 31 dadurch bei der Montage auf die distalen Enden 114 der Stützen 11 übergestülpt und dann durch das Verbindungselement 51 zunächst fixiert werden. Dann kann der Hauptträger zur Stütze 11 horizontal ausgerichtet werden, bevor beispielsweise eine Schraubverbindung vollständig festgezogen wird.

Der Modulträger 41 der Modulträgereinheit 4 ist auf dem Hauptträger 31 befestigt durch die Befestigungseinheit 6. Die Befestigungseinheit 6 umfasst Befestigungselemente 61, welche hier auch ein Langloch 61 umfassen, um den Modulträger 41 mit den Einschubaufnahmen 411 optimal ausrichten zu können.

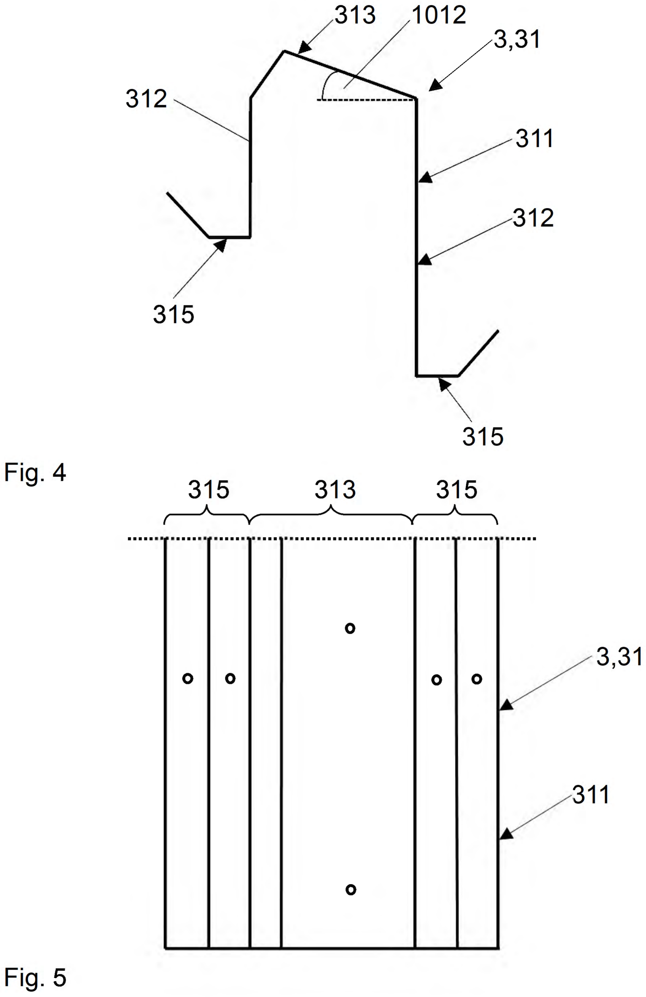

Fig. 4 zeigt eine schematische Skizze eines Querschnitts eines Hauptträgerprofils 311 eines Hauptträgers 31 einer Hauptträgereinheit 3 des Solartischsystems 100. Das Hauptträgerprofil 311 ist hier asymmetrisch ausgebildet und weist zwei Schenkel 312 und eine Grundseite 313 auf. Ein Winkel zwischen den Schenkeln 312 und der Grundseite 312 ist jeweils verschieden von 90 Grad. Eine Neigung eines Abschnitts der Grundseite 313 gibt hier die Neigung 1021 der Photovoltaikmodule 102 vor, da hierauf direkt die Modulträger 41 befestigt werden.

An den Enden der Schenkel 312 sind Abkantungen nach außen vorhanden, welch sich V-förmig von den Schenkeln 312 nach außen wegerstrecken, sodass diese Außerhalb der Projektionsfläche der Grundseite 313 liegen. Dadurch wird die Steifigkeit des Hauptträgers 31 noch weiter verbessert. Weiter können die Abkanten als Kabelaufnahmen für die Anschlusskabel der Photovoltaikmodule 102 genutzt werden.

Die asymmetrische Ausgestaltung des Hauptträgerprofils 311 des Hauptträgers 31 ist an den asymmetrischen Belastungsfall angepasst. Dadurch reicht hier eine Profilstärke des Hauptträgerprofils 311 von 2 Millimetern aus, um die Last dauerhaft abzufangen.

Fig. 5 zeigt eine schematische Draufsicht auf das Hauptträgerprofil 311 des Hauptträgers 31 der Hauptträgereinheit 3.

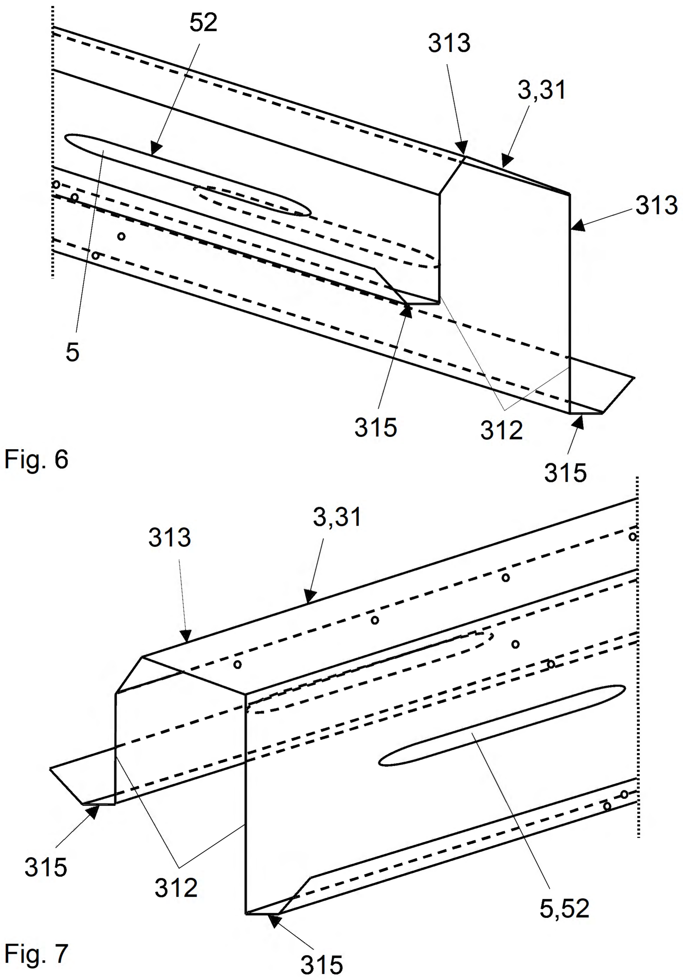

Fig. 6 zeigt eine erste schematische perspektivische Ansicht des Hauptträgerprofils 311 des Hauptträgers 31 der Hauptträgereinheit 3. Die als Langlöcher 52 ausgebildeten Verbindungselemente 52 sind hier an dem erstrecken sich hier längs des Hauptträgerprofils 311 des Hauptträgers 31. Da die Verbindungselemente 52 sich in den Stützen 11 quer hierzu erstrecken, siehe Fig. 3, können Toleranzen und Abstände beim Montieren besonders gut ausgeglichen werden.

Fig. 7 zeigt eine zweite schematische perspektivische Ansicht des Hauptträgerprofils 311 des Hauptträgers 31 der Hauptträgereinheit 3.

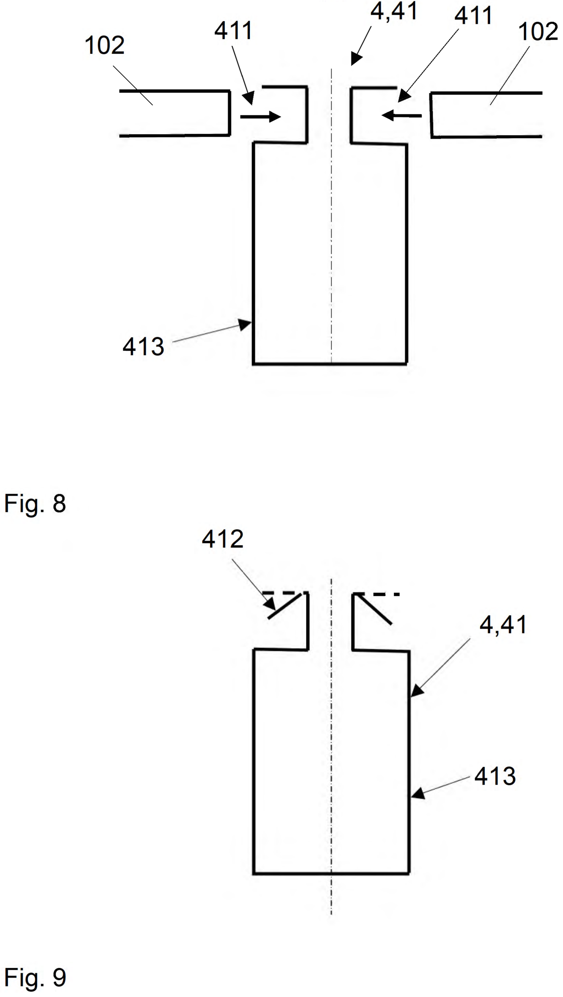

Fig. 8 zeigt eine schematische Skizze eines Modulträgerprofils 413 eines Modulträgers 41 einer Modulträgereinheit 4 des Solartischsystems 100. Das Modulträgerprofil 413 ist symmetrisch ausgebildet und weist hier zwei Einschubaufnahmen 411 für die Photovoltaikmodule 102 auf. Im aufgenommenen Zustand sind die Photovoltaikmodule 102 formschlüssig aufgenommen und an drei Seiten wenigstens teilweise umschlossen. Vorteilhaft können die Photovoltaikmodule 102 einfach in die Einschubaufnahmen 411 von zwei nebeneinander angeordneten und beabstandeten Modulträgern 41 nach deren Montage eingeschoben werden. Dann können die Photovoltaikmodule 102 die Sicherungseinheiten 412, die hier als Biegelaschen 412 ausgebildet sind durch einfaches Umbiegen gesichert werden.

Fig. 9 zeigt eine schematische Skizze des Modulträgerprofils 413 des Modulträgers 41 mit einer Sicherungseinheit 412. Die Sicherungseinheiten 412 sind in Längsrichtung des Modulträgers 411 als Biegelaschen 412 in das Profil 413 eingebracht. Nach dem Einschub eines Photovoltaikmoduls 102 können die Biegelaschen 412 einfach umgeknickt werden und so die Photovoltaikmodule 102 in der aktuellen Position gesichert werden. Dadurch sind keine Modulklemmen oder dergleichen zur Befestigung der Photovoltaikmodule 102 notwendig.

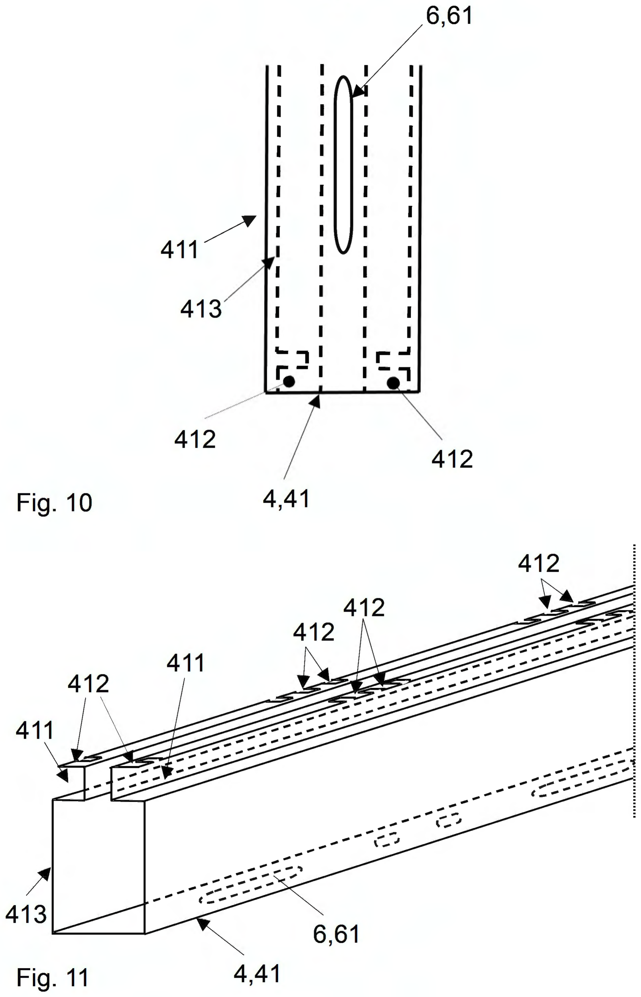

Fig. 10 zeigt eine schematische Ansicht des Modulträgerprofils 413 des Modulträgers 41 von unten mit dem als Langloch 61 ausgebildeten Befestigungselement 61 der Befestigungseinheit 6 und den Beigelaschen 412 der Sicherungseinheit 412.

Fig. 11 zeigt eine schematische perspektivische Ansicht des Modulträgerprofils 413 des Modulträgers 41 der Modulträgereinheit 4.

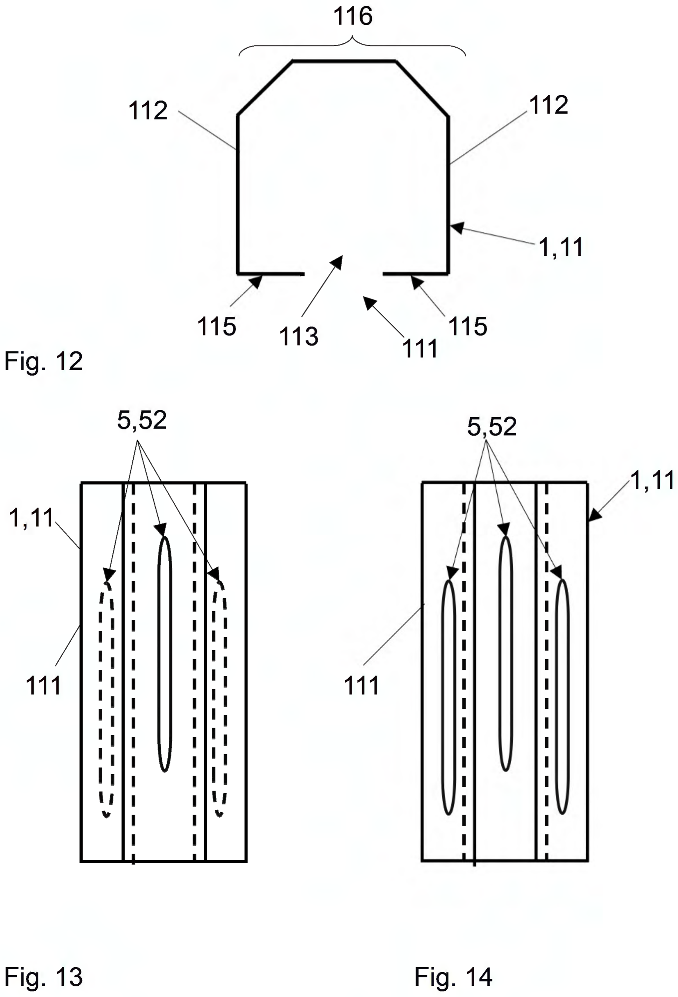

Fig. 12 zeigt eine schematische Skizze eines Stützenprofils 111 einer Stütze 11 einer Stützeneinheit 1 des Solartischsystems 100. Das Stützenprofil 111 ist als offenes Profil 111 sechs Biegungen und zwei Schenkeln 112 und einer Grundseite 116 ausgebildet und einer offenen Seite 113 des Profils 111 ausgebildet. Das Profil 111 weist Abkantungen 115 auf, welche nach innen zeigen und sich innerhalb einer Projektionsfläche des Grundseite 116 befinden. Das Stützenprofil 111 ist sehr widerstandsfähig gegenüber Knickung.

Fig. 13 zeigt eine schematische Ansicht des Stützenprofils 111 der Stütze 11 von oben mit der Verbindungseinheit 5 mit den Verbindungselementen 52. Die Verbindungselemente 52 sind hier als Langlöcher 52 ausgebildet, welche sich längs des Stützenprofils 111 erstrecken.

Fig. 14 zeigt eine schematische Ansicht des Stützenprofils 111 der Stütze 11 der Stützeneinheit 1 von unten.

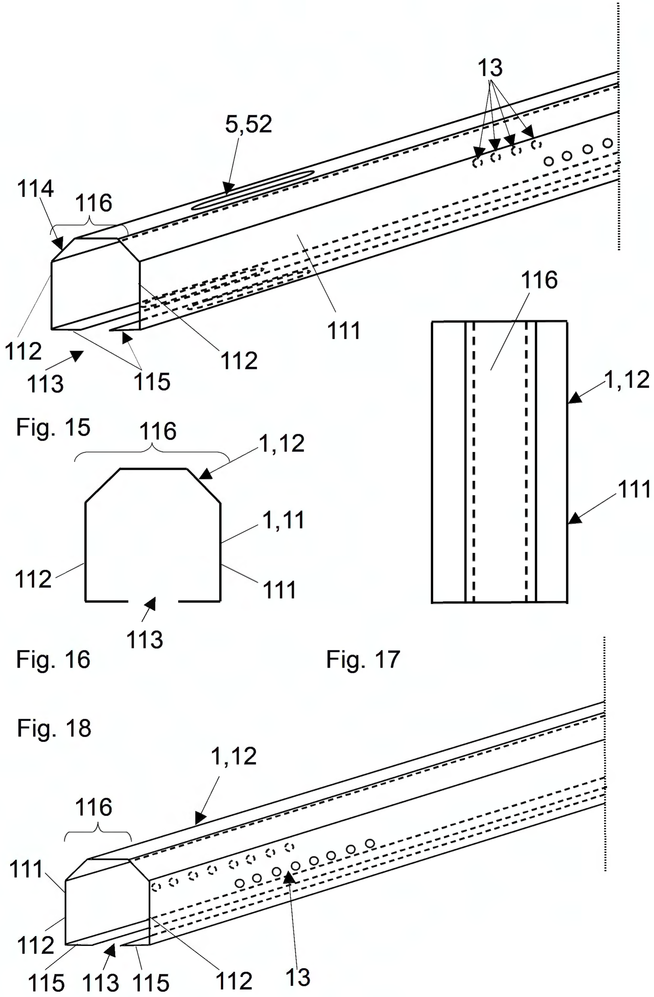

Fig. 15 zeigt eine schematische perspektivische Ansicht des Stützenprofils 111 der Stütze11 der Stützeneinheit 1.

Fig. 16 zeigt eine schematische Skizze einer Erdstütze 12 der Stützeneinheit 1. Die Erdstütze 12 weist das gleiche Stützenprofil111 auf, wie die Stütze 11.

Fig. 17 zeigt eine schematische Draufsicht auf das Stützenprofil 111 der Erdstütze 12.

Fig. 18 zeigt eine schematische perspektivische Ansicht des Stützenprofil 111 der Erdstütze 12. Das Stützenprofil 111 der Erdstütze 12 ist geringfügig weiter, sodass die Stütze 11 in die Erdstütze 12 einsteckbar ist. Durch die Einstelleinheit 13, welche hier Löcher in verschiedenen Abständen zum Ende der Erdstütze 12 umfasst, kann die Höhe der Stütze 11 eingestellt werden, um Unebenheiten des Bodens 2 ausgleichen zu können und eine Neigung 1021 der Photovoltaikmodule 102 einstellen zu können.

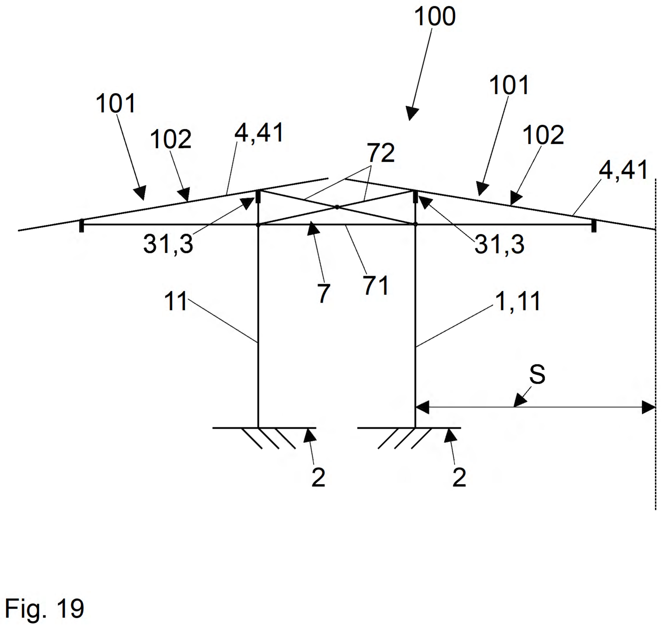

Fig. 19 zeigt eine weitere schematische Seitenansicht eines erfindungsgemäßen Solartischsystems 100 mit einer Spanneinheit 7 zur Vergrößerung der Spannweite S. Über die Spannweite S sind hier zwei Stützeneinheiten 1 vorhanden. Es sind Hauptträgereinheiten 3 vorhanden. Die Spanneinheit 7 umfasst hier einen Untergurt 71, welcher die äußeren Hauptträgereinheiten 3 gegeneinander verspannt, sodass hier auf Stützeneinheiten 1 verzichtet werden kann. Weiter sind Verspannelemente 72 zwischen den Stützeneinheiten 1 vorhanden, um die Stabilität zu gewährleisten. Vorteilhaft sind noch größere Spannweiten S möglich. Vorteilhaft ist eine Bearbeitung des darunterliegenden Bodens, wie einem Acker oder einem Feld, dadurch noch besser möglich. Durch die größeren Spannweiten S steigen die Flexibilität und die Wirtschaftlichkeit des Solartischsystems 100 und der Photovoltaikanlage 101. Durch die größere Spannweite ist auch der Einsatz noch bereiteter Maschinen, wie Anbaugräte zur Bodenbearbeitung, wie ein Plug oder dergleichen, möglich. Die Modulträgereinheiten 4 weisen hier eine entgegensetzte Neigung zueinander auf. Das Solartischsystem 100 eignet sich daher besonders zur Aufstellung in einer West-Ost-Ausrichtung, um gerade eine Stromproduktion morgens und abends zu verbessern.

Weiter Merkmale und Eigenschaften die bevorzugt vorhanden sein können, sind nachstehend aufgeführt:
- Statische Eignung für Wind/Schneelastzone 2, 500 m über N.N. in Deutschland;
- Bauhöhe Unterkante Module mind. 2,10 m über dem Boden;
- Modulmontage ohne konventionelle Modulklemmen;
- minimal notwendige Anzahl an normierten Verbindungsmitteln;
- Maximale Toleranz des Tisches gegenüber Geländeunebenheiten, Ungenauigkeiten der eingemessenen Rammpunkte, Lageabweichungen der Stützen nach dem Rammen (außer Lot);
- Gesamtkosten des Tisches unter 100 €/kiloWattPeak;
- Geländeneigungen durch tolerant zu verbindende Bauelemente zu eliminieren;
- Lage- und Richtungsabweichungen ausgleichen zu können, die sich bei langen Stützen proportional vergrößern;
- simple Montagesysteme für schnelle und fehlerfreie Bauten;
- die Arbeitssicherheit in hoher Arbeitshöhe zu bedenken und die Modulbefestigung revolutionär zu vereinfachen;
- das Tierwohl unter den Modulen weidender Tiere durch innenliegende Profilkanten zu gewährleisten;
- an den Folgeprozess der Verkabelung zu denken und Kabelverlegebühnen in die Profilkonturen einzuplanen.

### Bezugszeichen:

- 1: Stützeneinheit
- 11: Stütze
- 111: offenes Stützenprofil
- 112: Schenkel des Stützenprofils
- 113: offene Seite des Stützenprofils
- 114: distales Ende der Stützeneinheit
- 115: Abkantungen des Stützenprofils
- 116: Grundseite des Stützenprofils
- 12: Erdstütze
- 13: Einstelleinheit
- 2: Boden
- 3: Hauptträgereinheit
- 31: Hauptträger
- 311: Hauptträgerprofil
- 312: Schenkel
- 313: Grundseite
- 314: Länge des Hauptträgers
- 315: Abkantung
- 4: Modulträgereinheit
- 41: Modulträger
- 411: Einschubaufnahme
- 412: Sicherungseinheit, Biegelasche
- 413: Modulträgerprofil
- 5: Verbindungseinheit
- 51: Verbindungselement
- 52: Ausgleichselement, Langloch
- 6: Befestigungseinheit
- 61: Befestigungselement, Langloch
- 7: Spanneinheit
- 71: Untergurt
- 72: Verspannelement
- 100: Solartischsystem
- 101: Photovoltaikanlage
- 102: Photovoltaikmodul
- 1021: Neigung der Photovoltaikmodule
- B: Bauhöhe
- S: Spannweite

## Patentansprüche

1. Solartischsystem (100) für eine Photovoltaikanlage (101), insbesondere eine Agri-Photovoltaikanlage (101), umfassend:
- eine Mehrzahl an Stützeneinheiten (1) zur Ableitung der statischen Belastung in einen Boden (2); und
- eine Mehrzahl an Hauptträgereinheiten (3), wobei ein Hauptträger (31) der Hauptträgereinheit (3) an zwei Stützeneinheiten (1) aufnehmbar ist; und
- eine Mehrzahl an Modulträgereinheiten (4) zur Aufnahme von Photovoltaikmodulen (102), wobei eine Modulträgereinheit (4) an zwei Hauptträgereinheiten (3) aufnehmbar ist und ein Photovoltaikmodul (102) an zwei Modulträgereinheiten (4) aufnehmbar ist;
**dadurch gekennzeichnet, dass** der Hauptträger (31) an einem distalen Ende (114) einer Stütze (11) der Stützeneinheit (1) übergestülpt ist; und
dass die Hauptträgereinheit (3) einen Hauptträger (31) mit einem Hauptträgerprofil (311) aufweist, welches asymmetrisch ausgebildet ist; und/oder
dass die Modulträgereinheit (4) eine Einschubaufnahme (411) für Photovoltaikmodule (102) umfasst.

2. Solartischsystem (100) nach einem der vorhergehenden Ansprüche, wobei das Hauptträgerprofil (311) des Hauptträgers (31) der Hauptträgereinheit (3) seitliche Abkantungen (315) aufweist, welche insbesondere von den Schenkeln (312) nach außen abstehen.

3. Solartischsystem (100) nach einem der vorhergehenden Ansprüche, umfassend wenigstens eine Verbindungseinheit (5) zur Herstellung einer festen, und insbesondere lösbaren, Verbindung zwischen dem Hauptträger (31) der Hauptträgereinheit (3) und der Stütze (11) der Stützeneinheit (1).

4. Solartischsystem (100) nach dem vorhergehenden Anspruch, wobei die Verbindungseinheit (5) wenigstens ein Ausgleichselement (52), insbesondere zwei Ausgleichselemente (52), aufweist, welche einen Ausgleich von Positionstoleranzen bei der Montage ermöglichen, und wobei ein Ausgleichselement (52) wenigstens ein Langloch (52) umfasst.

5. Solartischsystem (100) nach einem der vorhergehenden Ansprüche, wobei die Stützeneinheit (1) wenigstens eine Erdstütze (12) umfasst, wobei die Erdstütze (12) in den Boden (2), wie ein Erdreich eintreibbar ist, und wobei die Stütze (11) in die Erdstütze (12) einsteckbar ist.

6. Solartischsystem (100) nach einem der vorhergehenden Ansprüche, wobei die Stützeneinheit (1) eine Einstelleinheit (13) zum Höhenausgleich und zur Einstellung einer Neigung (1021) aufweist.

7. Solartischsystem (100) nach einem der vorhergehenden Ansprüche, wobei die Modulträgereinheit (4) wenigstens eine Befestigungseinheit (42) zum Fixieren und Sichern der Lage der Photovoltaikmodule (102) umfasst.

8. Solartischsystem (100) nach dem vorhergehenden Anspruch, wobei die Befestigungseinheit (42) wenigstens eine Biegelasche (412) umfasst, welche an der Einschubaufnahme (411) ausgebildet ist.

9. Solartischsystem (100) nach einem der vorhergehenden Ansprüche, umfassend eine Befestigungseinheit (6) zur Befestigung der Modulträgereinheit (4) an der Hauptträgereinheit (3).

10. Solartischsystem (100) nach dem vorhergehenden Anspruch, wobei die Befestigungseinheit (6) wenigstens Befestigungselement (61) umfasst, welches als ein Langloch (61) ausgebildet ist zum Ausrichten und Positionieren der Modulträgereinheit (4) zur Hauptträgereinheit (3) bei der Montage.

11. Solartischsystem (100) nach einem der vorhergehenden Ansprüche, umfassend wenigstens eine Spanneinheit (7) zur Vergrößerung einer Spannweite (S).
Photovoltaikanlage (101), insbesondere Agri-Photovoltaikanlage (101) umfassend einen Solartischsystem (100) nach einem der vorhergehenden Ansprüche, wobei Photovoltaikmodule (102) in dem Modulträgereinheiten (4) aufgenommen sind.
